# EUROPEAN PATENT SPECIFICATION

(11) **EP 4 428 358 B1**
(45) Date of publication and mention of the grant of the patent: **29.10.2025**
(21) Application number: 24162372.7
(22) Date of filing: 08.03.2024
(51) Int. Cl.: F02K 9/08, F02K 9/34, B29C 70/30

(54) **COMPOSITE PROPULSION SYSTEM CASE AND METHOD FOR FORMING SAME**
VERBUNDANTRIEBSSYSTEMGEHÄUSE UND VERFAHREN ZUR FORMUNG DAVON
BOÎTIER DE SYSTÈME DE PROPULSION COMPOSITE ET SON PROCÉDÉ DE FORMATION

(30) Priority: 10.03.2023 US 202318120243
(43) Date of publication of application: 11.09.2024
(73) Proprietor: Rohr, Inc., Chula Vista, CA 91910-2098 (US)
(72) Inventor: NOLAN, Patrick, Laguna Hills, 92653 (US)
(74) Representative: Dehns

(56) References cited:
- WO-A1-01/32753
- CN-A- 114 517 713
- CN-A- 115 628 156
- CN-B- 112 277 337
- US-A- 3 928 965
- US-A- 5 564 272

## Description

### BACKGROUND

### 1. Technical Field

This disclosure relates generally to composite propulsion system cases and, more particularly, to methods for forming composite propulsion system cases.

### 2. Background Information

Aircraft propulsion systems are used to provide propulsion for various manned and unmanned aircraft. An aircraft propulsion system may include a propulsion system case configured to house fuel, propellant, and other internal components of the propulsion system. Various propulsion system cases and methods for forming propulsion system cases are known in the art. While these known propulsion system cases and methods have various advantages, there is still room in the art for improvement. There is a need in the art, therefore, for an improved propulsion system case and method of forming same.

### SUMMARY

It should be understood that any or all of the features or embodiments described herein can be used or combined in any combination with each and every other feature or embodiment described herein unless expressly noted otherwise.

According to an aspect of the present disclosure, a method for forming a composite propulsion system case includes providing a liner, bonding a thermoplastic film layer to the liner using an adhesive, and, subsequent to bonding the thermoplastic film layer to the liner, depositing a thermoplastic composite material onto the thermoplastic film layer to form an outer shell of the composite propulsion system case. The outer shell extends circumferentially about an axial centerline of the composite propulsion system case. The outer shell forms an outer radial surface of the composite propulsion system case.

In any of the aspects or examples described above and herein, the liner may include an elastomeric material.

In any of the aspects or examples described above and herein, the elastomeric material may include ethylene propylene-diene monomer (EPDM) rubber.

In any of the aspects or examples described above and herein, the liner may extend circumferentially about the axial centerline. The liner may include an outer radial liner surface. Bonding the thermoplastic film layer to the liner using the adhesive may include applying the adhesive to the outer radial liner surface and covering the outer radial liner surface with the thermoplastic film layer.

In any of the aspects or examples described above and herein, depositing the thermoplastic composite material onto the thermoplastic film layer may include depositing the thermoplastic composite material with an automated fiber placement (AFP) assembly.

In any of the aspects or examples described above and herein, depositing the thermoplastic composite material onto the thermoplastic film layer may include depositing at least one layer of a thermoplastic fiber-reinforced tape onto the thermoplastic film layer with the AFP assembly.

In any of the aspects or examples described above and herein, the thermoplastic fiber-reinforced tape may include a continuous carbon-fiber material.

In any of the aspects or examples described above and herein, the thermoplastic film layer may include a first thermoplastic material, the thermoplastic composite material may include a second thermoplastic material, and the first thermoplastic material may be the same as the second thermoplastic material.

In any of the aspects or examples described above and herein, the thermoplastic film layer may include a first thermoplastic material, the thermoplastic composite material may include a second thermoplastic material, and the first thermoplastic material may be different than the second thermoplastic material.

In any of the aspects or examples described above and herein, the method may further include applying a plasma surface treatment to the thermoplastic film layer prior to bonding the thermoplastic film layer to the liner.

According to another aspect of the present disclosure, a composite propulsion system case includes a liner, a thermoplastic film layer, and a composite outer shell extending circumferentially about an axial centerline of the composite propulsion system case. The liner forms an inner radial surface of the composite propulsion system case. The liner includes an elastomeric material body extending between and to an outer liner side and an inner liner side. The thermoplastic film layer extends between and to an outer film side and an inner film side. The inner film side is disposed on the outer liner side. The thermoplastic film layer includes a first thermoplastic material. The composite outer shell is disposed on the outer film side. The composite outer shell forms an outer radial surface of the composite propulsion system case. The composite outer shell includes a second thermoplastic material and a fiber reinforcing material.

In any of the aspects or examples described above and herein, the first thermoplastic material may be the same as the second thermoplastic material.

In any of the aspects or examples described above and herein, the inner film side may be bonded to the outer liner side by an adhesive layer.

In any of the aspects or examples described above and herein, the elastomeric material may include ethylene propylene-diene monomer (EPDM) rubber.

In any of the aspects or examples described above and herein, the fiber reinforcing material may include a continuous carbon-fiber material.

According to another aspect of the present disclosure, which the Applicant expressly reserves the right to claim independently, a method for forming a composite propulsion system case includes providing a liner. The liner includes an elastomeric material body extending between and to an outer liner side and an inner liner side. The method further includes disposing a thermoplastic film layer on the outer liner side. The thermoplastic film layer extends between and to an outer film side and an inner film side. The method further includes forming a composite outer shell on the outer film side, the composite outer shell extending circumferentially about an axial centerline of the composite propulsion system case, the composite outer shell forming an outer radial surface of the composite propulsion system case, the composite outer shell including a thermoplastic composite material.

In any of the aspects or examples described above and herein, the method may further include applying a plasma surface treatment to the thermoplastic film layer prior to disposing the thermoplastic film layer on the outer liner side.

In any of the aspects or examples described above and herein, the thermoplastic film layer may include a first thermoplastic material, the thermoplastic composite material may include a second thermoplastic material, and the first thermoplastic material may be the same as the second thermoplastic material.

In any of the aspects or examples described above and herein, the inner film side may be bonded to the outer liner side by an adhesive layer.

In any of the aspects or examples described above and herein, the elastomeric material may include ethylene propylene-diene monomer (EPDM) rubber.

The present disclosure, and all its aspects, examples and advantages associated therewith will become more readily apparent in view of the detailed description provided below, including the accompanying drawings.

### BRIEF DESCRIPTION OF THE DRAWINGS

FIG. 1 illustrates a schematic, side cutaway view of a portion of an aircraft including a propulsion system case, in accordance with one or more embodiments of the present disclosure.
FIG. 2 illustrates a cross-sectional view of the propulsion system case of FIG. 1 taken along Line 2-2 of FIG. 1, in accordance with one or more embodiments of the present disclosure.
FIG. 3 illustrates a block diagram depicting a method for forming a composite propulsion system case, in accordance with one or more embodiments of the present disclosure.
FIG. 4 illustrates a schematic, cutaway view of a propulsion system case at an intermediate stage of a manufacturing process, in accordance with one or more embodiments of the present disclosure.
FIG. 5 illustrates a schematic, cutaway view of a propulsion system case at another intermediate stage of a manufacturing process, in accordance with one or more embodiments of the present disclosure.
FIG. 6 illustrates a schematic, cutaway view of a propulsion system case at another intermediate stage of a manufacturing process, in accordance with one or more embodiments of the present disclosure.
FIG. 7 illustrates a schematic view of an exemplary plasma generator, in accordance with one or more embodiments of the present disclosure.
FIG. 8 illustrates a schematic view of an exemplary automated fiber placement assembly at another intermediate stage of a manufacturing process for a propulsion system case, in accordance with one or more embodiments of the present disclosure.

### DETAILED DESCRIPTION

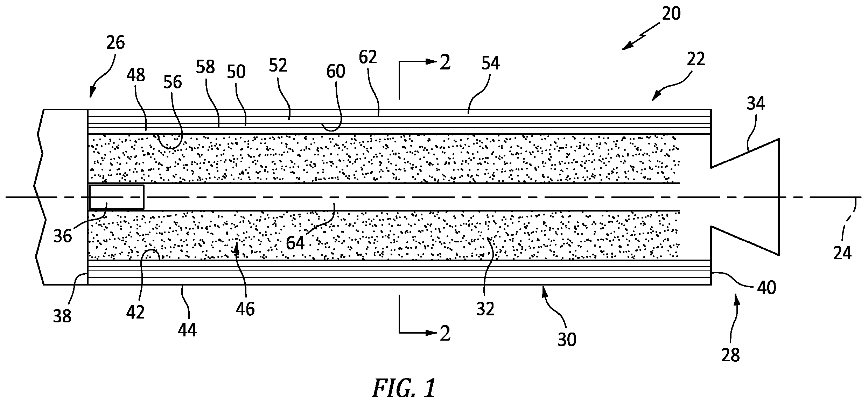

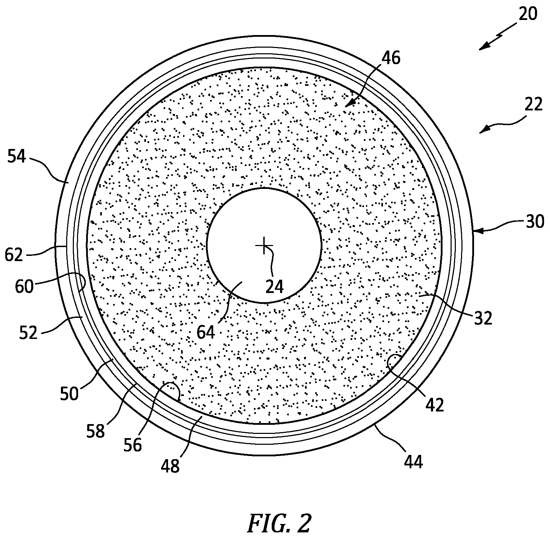

FIGS. 1 and 2 illustrate a portion of an aircraft 20. The aircraft 20 of FIGS. 1 and 2 is configured as a rocket (e.g., a solid-fuel rocket), however, the present disclosure is not limited to any particular aircraft configuration. For example, alternative configurations of the aircraft 20 may include fixed-wing aircraft (e.g., an airplane), rotary-wing aircraft (e.g., a helicopter), tilt-rotor aircraft, tilt-wing aircraft, or other aerial vehicles. Moreover, alternative configurations of the aircraft 20 may include manned aerial vehicles or an unmanned aerial vehicles (UAVs, e.g., a drone). FIG. 1 illustrates a side cutaway view of the aircraft 20. FIG. 2 illustrates a cross-sectional view of the aircraft 20 of FIG. 1. The aircraft 20 includes a propulsion system 22. The propulsion system 22 extends circumferentially about (e.g., completely around) an axial centerline 24. The propulsion system 22 extends (e.g., axially extends) along the axial centerline 24 between and to a first end 26 of the propulsion system 22 and a second end 28 of the propulsion system 22. The propulsion system 22 of FIGS. 1 and 2 includes a case 30, a propellant 32, a nozzle 34, and an igniter 36.

The case 30 forms a housing for interior components of the propulsion system 22 such as, but not limited to, the propellant 32. The case 30 of FIGS. 1 and 2 is configured as a rocket motor case, however, aspects of the present disclosure case 30 are relevant to other aircraft and aircraft propulsion system cases, housings, pressure vessels, and the like. The case 30 extends circumferentially about (e.g., completely around) the axial centerline 24. For example, the case 30 may have a generally tubular configuration. The case 30 extends (e.g., axially extends) along the axial centerline 24 between and to a first end 38 of the case 30 and a second end 40 of the case 30. The case 30 extends (e.g., radially extends) between and to an inner radial surface 42 of the case 30 and an outer radial surface 44 of the case 30. Each of the inner radial surface 42 and the outer radial surface 44 may extend from the first end 38 to the second end 40. The inner radial surface 42 surrounds and forms a combustion chamber 46 of the propulsion system 22. The combustion chamber 46 extends (e.g., axially extends) along the axial centerline 24 within (e.g., radially within) the inner radial surface 42. The outer radial surface 44 forms an exterior surface of the propulsion system 22. The case 30 of FIGS. 1 and 2 includes a liner 48, an adhesive layer 50, a polymer film layer 52, and an outer shell 54.

The liner 48 extends circumferentially about (e.g., completely around) the axial centerline 24. The liner 48 may extend from the first end 38 to the second end 40. The liner 48 forms the inner radial surface 42. For example, the liner 48 is disposed between (e.g., radially between) the combustion chamber 46 and the other components 50, 52, 54 of the case 30 to protect these other components 50, 52, 54 of the case 30 from thermal energy and other combustion conditions resulting from burning of the propellant 32 within the combustion chamber 46. The liner 48 includes an inner side 56 (e.g., an inner radial side) forming the inner radial surface 42 and an outer side 58 (e.g., an outer radial side) opposite the inner side 56. The liner 48 includes a liner body material. The liner body material may form all or a substantial portion of the liner 48. The liner body material may be an elastomeric material (e.g., an elastomeric polymer material) such as, but not limited to, ethylene propylene-diene monomer (EPDM) rubber and other synthetic rubber materials. The liner body material may further include a fiber reinforcing material. The fiber reinforcing material of the liner body material may include high-strength synthetic fibers such as, but not limited to, aramid or para-aramid synthetic fibers, nylon fibers, high modulus polyethylene (HMPE) fibers, and the like. As an example, the fiber reinforcing material may include high-strength synthetic fibers such as those sold as KEVLAR^{®} (E. I. Du Pont de Nemours and Co., Wilmington, Del.) fibers.

The adhesive layer 50 is disposed between (e.g., radially between) the liner 48 and the polymer film layer 52. For example, the adhesive layer 50 is disposed on all or a substantial portion of the outer side 58. The adhesive layer 50 is configured to securely bond the polymer film layer 52 to the liner 48. The adhesive layer 50 may be formed by any adhesive or other bonding material which is suitable for securely bonding the liner 48 (e.g., an elastomeric material) to the polymeric film layer (e.g., a thermoplastic material).

The polymer film layer 52 is disposed between (e.g., radially between) the adhesive layer 50 and the outer shell 54. As previously discussed, the polymer film layer 52 is securely bonded to the liner 48 by the adhesive layer 50. The polymer film layer 52 extends circumferentially about (e.g., completely around) the axial centerline 24. The polymer film layer 52 may extend from the first end 38 to the second end 40. The polymer film layer 52 may be disposed on or otherwise cover all or a substantial portion of the outer side 58. The polymer film layer 52 may include a single polymer film or a plurality of discrete polymer films. The polymer film layer 52 includes an inner side 60 (e.g., an inner radial side) bonded to the outer side 58 and an outer side 62 (e.g., an outer radial side) opposite the inner side 60. The polymer film layer 52 includes a film material. The film material may form all or a substantial portion of the polymer film layer 52. The film material is a thermoplastic material (e.g., a thermoplastic resin) such as, but not limited to, polyether ether ketone (PEEK), polyether ketone ketone (PEKK), polyaryletherketone (PAEK), polyphenylene sulfide (PPS), polyetherimide (PEI), polypropylene (PP), or the like, including combinations thereof. The present disclosure, however, is not limited to any particular thermoplastic material for the film material.

The outer shell 54 is disposed on (e.g., bonded to) and radially outward of the polymer film layer 52. The outer shell 54 extends circumferentially about (e.g., completely around) the axial centerline 24. The outer shell 54 may extend from the first end 38 to the second end 40. The outer shell 54 forms the outer radial surface 44. The outer shell 54 includes a shell material. The shell material may form all or a substantial portion of the outer shell 54. The shell material is a thermoplastic composite material including a thermoplastic matrix material and a fiber reinforcing material.

The thermoplastic matrix material (e.g., a thermoplastic resin) may include thermoplastic materials such as, but not limited to, polyether ether ketone (PEEK), polyether ketone ketone (PEKK), polyaryletherketone (PAEK), polyphenylene sulfide (PPS), polyetherimide (PEI), polypropylene (PP), or the like, including combinations thereof. The present disclosure, however, is not limited to any particular thermoplastic matrix material for the shell material. The thermoplastic matrix material for the shell material may be the same as the thermoplastic material for the polymer film layer 52, for example, to improve bonding between the outer shell 54 and the polymer film layer 52.

The fiber reinforcing material for the thermoplastic composite material may include a plurality of fibers such as, but not limited to carbon fibers, fiberglass fibers, aramid or para-aramid synthetic fibers, or the like embedded in the thermoplastic matrix material. The plurality of fibers may be configured as continuous and/or discontinuous fibers. Continuous fibers may be configured with a substantially parallel, in-lane fiber orientation. Continuous fibers may generally be characterized as having a high ratio of fiber length to fiber diameter, for example, in comparison to discontinuous fibers. Discontinuous fibers may be configured with a random, in-plane fiber orientation. Discontinuous fibers may generally be characterized as having a low ratio of fiber length to fiber diameter. For example, discontinuous fibers may be configured as chopped fibers.

The propellant 32 is disposed within the combustion chamber 46. The propellant 32 may be disposed at (e.g., on, adjacent, or proximate) the inner side 56 along all or a substantial portion of an axial span of the inner side 56. The propellant 32 may form a longitudinal cavity 64 (e.g., a center perforation) extending axially through the propellant 32 along the axial centerline 24. The propellant 32 is configured as a solid fuel propellant charge (e.g., a "grain") which, when burned, produces combustion exhaust gas used to facilitate propulsion for the aircraft 20. The propellant 32 may be any solid fuel propellant material conventionally known in the art, and the present disclosure is not limited to any particular solid fuel propellant material.

The nozzle 34 is disposed at (e.g., on, adjacent, or proximate) the second end 28. The nozzle 34 is configured to direct the combustion exhaust gas from the burned propellant 32 to facilitate propulsion of the aircraft 20.

The igniter 36 is disposed within the combustion chamber 46. The igniter 36 may be a small charge of flammable material that, when burned, releases a predetermined amount of hot combustion gas, which hot combustion gas may ignite the propellant 32. The combustion of the igniter 36 can be initiated, for example, by an electric current flowing through a heater wire (not shown) adjacent to, or embedded in, the flammable igniter material. The present disclosure, however, is not limited to any particular configuration for the igniter 36.

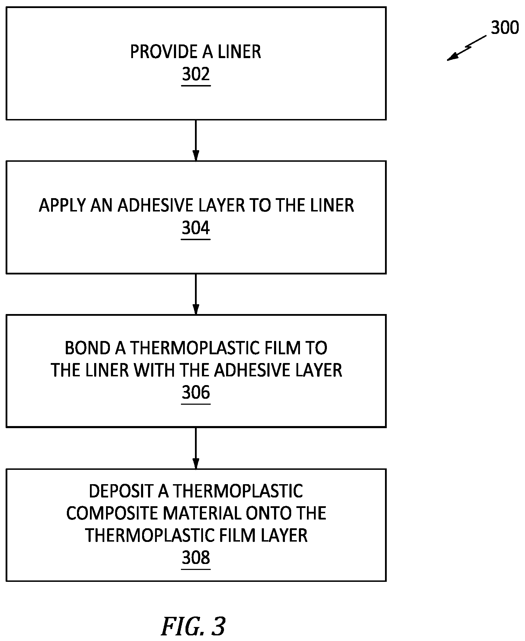

Referring to FIG. 3, a Method 300 for forming a composite propulsion system case (e.g., the propulsion system case 30) is provided. FIG. 3 illustrates a flowchart for the Method 300. Unless otherwise noted herein, it should be understood that the steps of Method 300 are not required to be performed in the specific sequence in which they are discussed below and, in some embodiments, the steps of Method 300 may be performed separately or simultaneously.

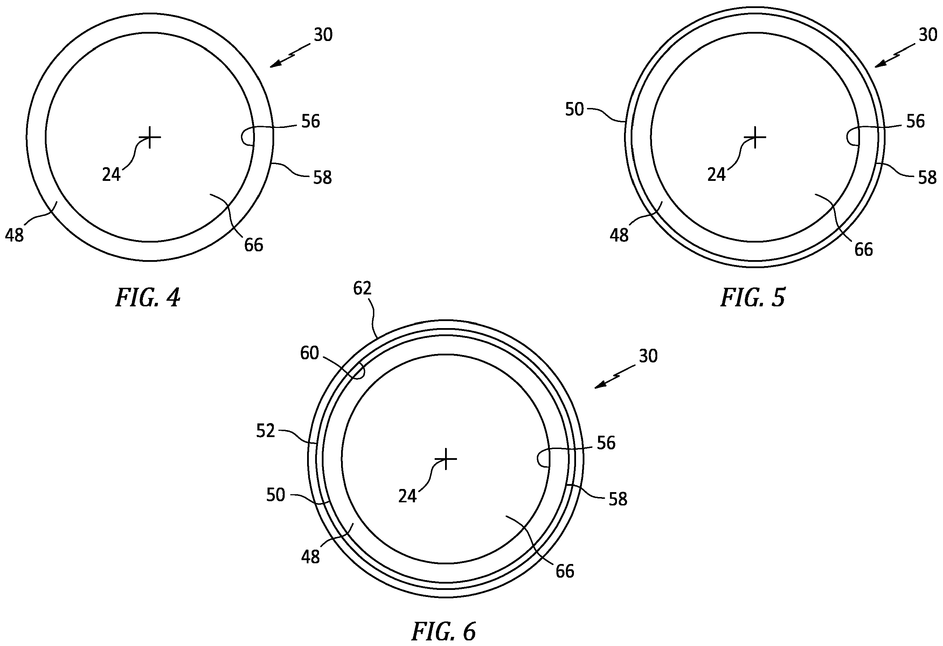

Step 302 includes forming or otherwise providing the liner 48. For example, the elastomeric material (e.g., EPDM rubber) of the liner 48 may be shaped and vulcanized to form a tubular (e.g., cylindrical) configuration of the liner 48. The liner 48 may be positioned on a tooling support structure such as, but not limited to, a mandrel 66 as shown in FIG. 4. The mandrel 66 may be configured for rotation (e.g., about the axial centerline 24) to facilitate circumferential positioning of the liner 48.

Step 304 includes applying the adhesive layer 50 to the liner 48. As shown in FIG. 5, for example, the adhesive layer 50 is applied to all or a substantial portion of the outer side 58. An example of a suitable adhesive for the adhesive layer 50 may include, but is not limited to, an adhesive sold under the registered trademark CHEMLOK^{®} ( e.g., CHEMLOK ^{®} 238 adhesive) by the Lord Corporation (Cary, North Carolina). However, the present disclosure is not limited to any particular adhesive or combination of adhesives for the adhesive layer 50.

Step 306 includes bonding the polymer film layer 52 to the liner 48 with the adhesive layer 50 as shown in FIG. 6. For example, the polymer film layer 52 may be bonded to all or a substantial portion of the outer side 58 by the adhesive layer 50.

Step 306 may additionally include applying a surface modification treatment to the polymer film layer 52. The surface modification treatment may be used, for example, to improve adhesion between the polymer film layer 52 and the thermoplastic matrix material of the outer shell 54 and/or the elastomeric material of the liner 48. Surface modification treatment of the polymer film layer 52 may be performed prior to bonding the polymer film layer 52 to the liner 48. For example, the surface modification treatment may be applied to the polymer film or plurality of discrete polymer films. The surface modification treatment may be applied to the inner side 60 and/or the outer side 62. Alternatively, the surface modification treatment of the polymer film layer 52 may be performed (e.g., applied to the outer side 62) after bonding the polymer film layer 52 to the liner 48. Examples of suitable surface modification treatments for the polymer film layer 52 may include, but are not limited to, chemical treatment, plasma treatment, and carbonization treatments.

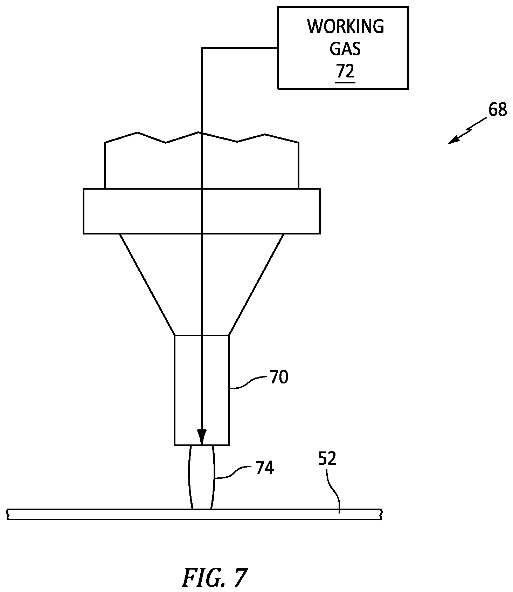

In one example, the surface modification treatment may be a plasma treatment performed, for example, using a plasma generator 68. FIG. 7 illustrates application of a plasma treatment to the polymer film layer 52 using an exemplary configuration of the plasma generator 68. The plasma generator 68 of FIG. 7 includes a plasma nozzle 70. The plasma generator 68 is configured to generate a plasma (e.g., from a stored working gas 72 such as compressed air, hydrogen, nitrogen, oxygen, or the like) and direct a plasma stream 74 (e.g., a plasma jet) onto the polymer film layer 52 with the plasma nozzle 70. The plasma generator 68 may be configured to generate an atmospheric-pressure plasma. As used herein, the term "atmospheric-pressure plasma" refers to a plasma having a pressure which is approximately the same as the pressure of the surrounding atmosphere and can be contrasted with "low-pressure" or "high-pressure" plasmas which may require the use of a pressure vessel (e.g., a reaction vessel) to maintain the plasma pressure above that of the surrounding atmosphere. Atmospheric-pressure plasmas may be generated by various plasma generator configurations such as, but not limited to, an arc discharge configuration or a corona discharge configuration, and the present disclosure is not limited to any particular plasma generator 68 configuration. Application of the plasma treatment to the polymer film layer 52 may remove contaminants from surfaces of the polymer film layer 52, which contaminants might otherwise interfere with adhesion between the polymer film layer 52 and the outer shell 54 and/or the liner 48. Application of the plasma treatment to the polymer film layer 52 (e.g., chemical and physical interaction of the plasma stream 74 with the polymer film layer 52) may also activate the polymer film layer 52 (e.g., increase a surface energy of the polymer film layer 52), thereby improving wettability of the polymer film layer 52 with respect to the adhesive layer 50 and/or the thermoplastic matrix material of the outer shell 54.

Step 308 includes depositing the thermoplastic composite material onto the polymer film layer 52 (e.g., the outer side 58) to form the outer shell 54 of the case 30. For example, the thermoplastic composite material may be deposited onto the polymer film layer 52 to form a continuous carbon-fiber composite structure of the outer shell 54. Depositing the thermoplastic composite material may include forming a plurality of layers of the thermoplastic composite material on the polymer film layer 52.

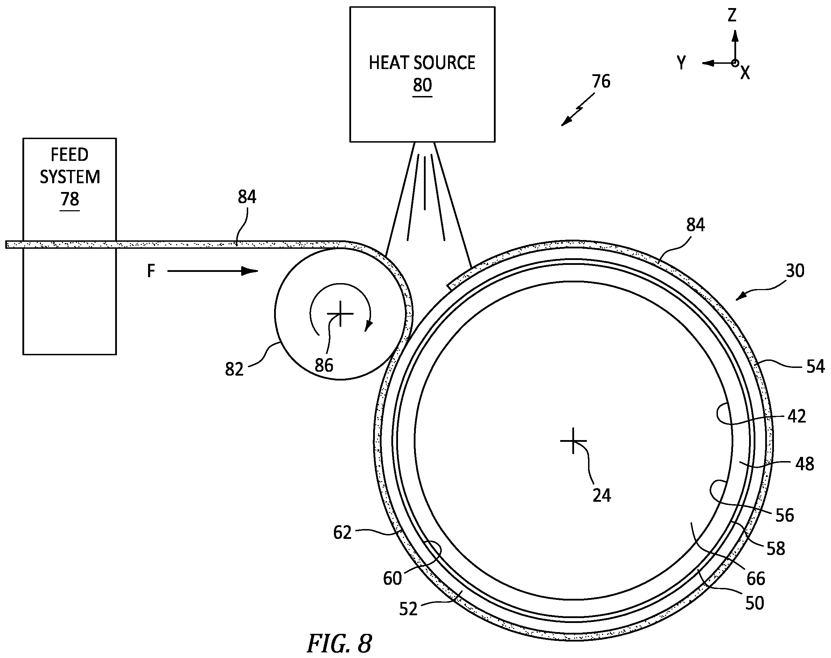

Depositing the thermoplastic composite material may be performed, for example, using an automated fiber placement (AFP) assembly 76. FIG. 8 schematically illustrates an exemplary configuration of the AFP assembly 76. The AFP assembly 76 of FIG. 8 includes a feed system 78, a heat source 80, and a compression roller 82. The feed system 78 is configured to direct (e.g., feed) a composite material tape 84 in a feed direction F for deposition onto the polymer film layer 52. The composite material tape 84 includes the thermoplastic composite material (e.g., the fiber reinforcing material embedded in or "impregnated" by the thermoplastic matrix material). For example, the composite material tape 84 may be configured as a pre-preg or tow-preg tape. The heat source 80 is configured to direct thermal energy to the composite material tape 84 and/or the polymer film layer 52. The heat source 80 may direct thermal energy to melt a portion of the composite material tape 84 (e.g., the thermoplastic matrix material) immediately before the portion is deposited onto an underlying layer of the polymer film layer 52 or the composite material tape 84. The heat source 80 may additionally direct thermal energy to melt a portion of the underlying layer of the polymer film layer 52 or the composite material tape 84 immediately before the composite material tape 84 is deposited onto the underlying layer. The heat source 80 may be configured, for example, as a laser, a heat gas nozzle, or another suitable source for directing thermal energy. The compression roller 82 is configured as cylindrical roller which is rotatable about a rotational axis 86. The compression roller 82 is configured to direct the composite material tape 84 onto an underlying layer of the polymer film layer 52 or the composite material tape 84 and to apply a compressive force onto the deposited composite material tape 84 and one or more underlying layers to facilitate consolidation of the deposited composite material tape 84 and the one or more underlying layers. The AFP assembly 76 may be configured to translate and/or rotate about one or more of an x-axis, a y-axis, and a z-axis, for example, relative to the case 30. Additionally or alternatively, the mandrel 66 may rotate to position the case 30 relative to the AFP assembly 76. The present disclosure is not limited to the particular AFP assembly of FIG. 8 for depositing the thermoplastic composite material onto the polymer film layer 52 (e.g., the outer side 58) to form the outer shell 54. Moreover, the present disclosure is not limited to the use of an automated fiber placement process for depositing the thermoplastic composite material and alternative processes such as, but not limited to, a filament winding process may additionally or alternatively be applied.

The present disclosure composite propulsion system case (e.g., the case 30) and method for forming the composite propulsion system case facilitates manufacture of the composite propulsion system case in comparison to at least some conventional manufacturing processes of which I am aware. For example, in at least some conventional manufacturing processes, the composite material forming the composite propulsion system case exterior may be formed and, subsequently, an ablative liner, insulating liner, heat shield, or other interior layer of the composite propulsion system case may be installed inside the composite exterior. However, access to the interior of the composite propulsion system case for installation and surface preparation of the interior layer may be difficult. In contrast, the liner 48 of the present disclosure may be shaped, formed, and otherwise prepared in advance of assembly with the composite outer shell 54. The polymer film layer 52 bonded (e.g., by the adhesive layer 50) to the liner 48 provides an interface which facilitates secure attachment of the outer shell 54 to the liner 48. As a result, the thermoplastic composite material of the outer shell 54 can be deposited onto the polymer film layer 52 and underlying liner 48 using an in situ composite formation process, such as the automated fiber placement process previously discussed. In other words, the thermoplastic composite material of the outer shell 54 can be built directly on the polymer film layer 52 and underlying liner 48.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A method for forming a composite propulsion system case (30), the method comprising:
providing a liner (48);
bonding a thermoplastic film layer (52) to the liner (48) using an adhesive (50); and
subsequent to bonding the thermoplastic film layer (52) to the liner (48), depositing a thermoplastic composite material onto the thermoplastic film layer (52) to form an outer shell (54) of the composite propulsion system case (30), the outer shell (54) extending circumferentially about an axial centerline (24) of the composite propulsion system case (30), the outer shell (54) forming an outer radial surface (44) of the composite propulsion system case (30).

2. The method of claim 1, wherein the liner (48) includes an elastomeric material.

3. The method of claim 2, wherein the elastomeric material includes ethylene propylene-diene monomer (EPDM) rubber.

4. The method of any preceding claim, wherein:
the liner (48) extends circumferentially about the axial centerline (24), the liner (48) including an outer radial liner surface; and
bonding the thermoplastic film layer (52) to the liner (48) using the adhesive (50) includes applying the adhesive (50) to the outer radial liner surface and covering the outer radial liner surface with the thermoplastic film layer (52).

5. The method of any preceding claim, wherein depositing the thermoplastic composite material onto the thermoplastic film layer (52) includes depositing the thermoplastic composite material with an automated fiber placement (AFP) assembly (76).

6. The method of claim 5, wherein depositing the thermoplastic composite material onto the thermoplastic film layer (52) includes depositing at least one layer of a thermoplastic fiber-reinforced tape (84) onto the thermoplastic film layer (52) with the AFP assembly (76).

7. The method of claim 6, wherein the thermoplastic fiber-reinforced tape (84) includes a continuous carbon-fiber material.

8. The method of any preceding claim, wherein the thermoplastic film layer (52) includes a first thermoplastic material, the thermoplastic composite material includes a second thermoplastic material, and the first thermoplastic material is the same as the second thermoplastic material.

9. The method of any of claims 1 to 7, wherein the thermoplastic film layer (52) includes a first thermoplastic material, the thermoplastic composite material includes a second thermoplastic material, and the first thermoplastic material is different than the second thermoplastic material.

10. The method of any preceding claim, further comprising applying a plasma surface treatment to the thermoplastic film layer (52) prior to bonding the thermoplastic film layer (52) to the liner (48).

11. A composite propulsion system case (30) comprising:
a liner (48), a thermoplastic film layer (52), and a composite outer shell (54) extending circumferentially about an axial centerline (24) of the composite propulsion system case (30);
the liner (48) forming an inner radial surface (42) of the composite propulsion system case (30), the liner (48) including an elastomeric material body extending between and to an outer liner side (58) and an inner liner side (56);
the thermoplastic film layer (52) extending between and to an outer film side (62) and an inner film side (60), the inner film side (60) disposed on the outer liner side (58), the thermoplastic film layer (52) including a first thermoplastic material; and
the composite outer shell (54) disposed on the outer film side (62), the composite outer shell (54) forming an outer radial surface (44) of the composite propulsion system case (30), the composite outer shell (54) including a second thermoplastic material and a fiber reinforcing material.

12. The composite propulsion system case of claim 11, wherein the first thermoplastic material is the same as the second thermoplastic material.

13. The composite propulsion system case of claim 11 or 12, wherein the inner film side (60) is bonded to the outer liner side (58) by an adhesive layer (50).

14. The composite propulsion system case of any of claims 11 to 13, wherein the elastomeric material includes ethylene propylene-diene monomer (EPDM) rubber.

15. The composite propulsion system case of any of claims 11 to 14, wherein the fiber reinforcing material includes a continuous carbon-fiber material.

## Patentansprüche

1. Verfahren zum Formen eines Verbundantriebssystemgehäuses (30), wobei das Verfahren umfasst:
Bereitstellen einer Auskleidung (48);
Verbinden einer thermoplastischen Filmschicht (52) mit der Auskleidung (48) unter Verwendung eines Klebstoffs (50); und
nach dem Verbinden der thermoplastischen Filmschicht (52) mit der Auskleidung (48), Abscheiden eines thermoplastischen Verbundmaterials auf der thermoplastischen Filmschicht (52), um eine Außenhülle (54) des Verbundantriebssystemgehäuses (30) zu bilden, wobei sich die Außenhülle (54) in Umfangsrichtung um eine axiale Mittellinie (24) des Verbundantriebssystemgehäuses (30) erstreckt, wobei die Außenhülle (54) eine äußere radiale Fläche (44) des Verbundantriebssystemgehäuses (30) bildet.

2. Verfahren nach Anspruch 1, wobei die Auskleidung (48) ein elastomeres Material beinhaltet.

3. Verfahren nach Anspruch 2, wobei das elastomere Material Ethylen-Propylen-Dien-Monomer-Kautschuk (Ethylen-Propylen-Dien-Monomer - EPDM) beinhaltet.

4. Verfahren nach einem der vorhergehenden Ansprüche, wobei:
sich die Auskleidung (48) in Umfangsrichtung um die axiale Mittellinie (24) erstreckt, wobei die Auskleidung (48) eine äußere radiale Auskleidungsfläche beinhaltet; und
das Verbinden der thermoplastischen Filmschicht (52) mit der Auskleidung (48) unter Verwendung des Klebstoffs (50) das Aufbringen des Klebstoffs (50) auf die äußere radiale Auskleidungsfläche und das Abdecken der äußeren radialen Auskleidungsfläche mit der thermoplastischen Filmschicht (52) beinhaltet.

5. Verfahren nach einem der vorhergehenden Ansprüche, wobei das Abscheiden des thermoplastischen Verbundmaterials auf der thermoplastischen Filmschicht (52) das Abscheiden des thermoplastischen Verbundmaterials mit einer automatisierten Faserlege-Baugruppe (automated fiber placement - AFP) (76) beinhaltet.

6. Verfahren nach Anspruch 5, wobei das Abscheiden des thermoplastischen Verbundmaterials auf der thermoplastischen Filmschicht (52) das Abscheiden wenigstens einer Schicht eines thermoplastischen faserverstärkten Bandes (84) auf der thermoplastischen Filmschicht (52) mit der AFP-Baugruppe (76) beinhaltet.

7. Verfahren nach Anspruch 6, wobei das thermoplastische faserverstärkte Band (84) ein kontinuierliches Kohlenstofffasermaterial beinhaltet.

8. Verfahren nach einem der vorhergehenden Ansprüche, wobei die thermoplastische Filmschicht (52) ein erstes thermoplastisches Material beinhaltet, das thermoplastische Verbundmaterial ein zweites thermoplastisches Material beinhaltet und das erste thermoplastische Material dasselbe ist wie das zweite thermoplastische Material.

9. Verfahren nach einem der Ansprüche 1 bis 7, wobei die thermoplastische Filmschicht (52) ein erstes thermoplastisches Material beinhaltet, das thermoplastische Verbundmaterial ein zweites thermoplastisches Material beinhaltet und das erste thermoplastische Material sich von dem zweiten thermoplastischen Material unterscheidet.

10. Verfahren nach einem der vorhergehenden Ansprüche, ferner umfassend das Aufbringen einer Plasma-Oberflächenbehandlung auf die thermoplastische Filmschicht (52) vor dem Verbinden der thermoplastischen Filmschicht (52) mit der Auskleidung (48).

11. Verbundantriebssystemgehäuse (30), umfassend:
eine Auskleidung (48), eine thermoplastische Filmschicht (52) und eine Verbundaußenhülle (54), die sich in Umfangsrichtung um eine axiale Mittellinie (24) des Verbundantriebssystemgehäuses (30) erstreckt;
wobei die Auskleidung (48) eine innere radiale Fläche (42) des Verbundantriebssystemgehäuses (30) bildet, wobei die Auskleidung (48) einen elastomeren Materialkörper beinhaltet, der sich zwischen und zu einer äußeren Auskleidungsseite (58) und einer inneren Auskleidungsseite (56) erstreckt;
wobei sich die thermoplastische Filmschicht (52) zwischen und zu einer äußeren Filmseite (62) und einer inneren Filmseite (60) erstreckt, wobei die innere Filmseite (60) auf der äußeren Auskleidungsseite (58) angeordnet ist, wobei die thermoplastische Filmschicht (52) ein erstes thermoplastisches Material beinhaltet; und
wobei die Verbundaußenhülle (54) auf der äußeren Filmseite (62) angeordnet ist, wobei die Verbundaußenhülle (54) eine äußere radiale Fläche (44) des Verbundantriebssystemgehäuses (30) bildet, wobei die Verbundaußenhülle (54) ein zweites thermoplastisches Material und ein Faserverstärkungsmaterial beinhaltet.

12. Verbundantriebssystemgehäuse nach Anspruch 11, wobei das erste thermoplastische Material dasselbe ist wie das zweite thermoplastische Material.

13. Verbundantriebssystemgehäuse nach Anspruch 11 oder 12, wobei die innere Filmseite (60) durch eine Klebstoffschicht (50) mit der äußeren Auskleidungsseite (58) verbunden ist.

14. Verbundantriebssystemgehäuse nach einem der Ansprüche 11 bis 13, wobei das elastomere Material Ethylen-Propylen-Dien-Monomer-Kautschuk (EPDM-Kautschuk) beinhaltet.

15. Verbundantriebssystemgehäuse nach einem der Ansprüche 11 bis 14, wobei das Faserverstärkungsmaterial ein kontinuierliches Kohlenstofffasermaterial beinhaltet.

## Revendications

1. Procédé de formation d'un boîtier de système de propulsion composite (30), le procédé comprenant :
la fourniture d'un revêtement (48) ;
la liaison d'une couche de film thermoplastique (52) au revêtement (48) en utilisant un adhésif (50) ; et
après avoir lié la couche de film thermoplastique (52) au revêtement (48), le dépôt d'un matériau composite thermoplastique sur la couche de film thermoplastique (52) pour former une coque extérieure (54) du boîtier de système de propulsion composite (30), la coque extérieure (54) se prolongeant circonférentiellement autour d'une ligne centrale axiale (24) du boîtier de système de propulsion composite (30), la coque extérieure (54) formant une surface radiale extérieure (44) du boîtier de système de propulsion composite (30).

2. Procédé selon la revendication 1, dans lequel le revêtement (48) comporte un matériau élastomère.

3. Procédé selon la revendication 2, dans lequel le matériau élastomère comporte du caoutchouc monomère d'éthylène propylène-diène (EPDM).

4. Procédé selon une quelconque revendication précédente, dans lequel :
le revêtement (48) se prolonge circonférentiellement autour de la ligne centrale axiale (24), le revêtement (48) comportant une surface de revêtement radiale extérieure ; et
la liaison de la couche de film thermoplastique (52) au revêtement (48) en utilisant l'adhésif (50) comporte l'application de l'adhésif (50) sur la surface de revêtement radiale extérieure et le recouvrement de la surface de revêtement radiale extérieure avec la couche de film thermoplastique (52).

5. Procédé selon une quelconque revendication précédente, dans lequel le dépôt du matériau composite thermoplastique sur la couche de film thermoplastique (52) comporte le dépôt du matériau composite thermoplastique avec un ensemble de placement de fibres automatisé (AFP) (76).

6. Procédé selon la revendication 5, dans lequel le dépôt du matériau composite thermoplastique sur la couche de film thermoplastique (52) comporte le dépôt d'au moins une couche d'un ruban renforcé de fibres thermoplastiques (84) sur la couche de film thermoplastique (52) avec l'ensemble AFP (76).

7. Procédé selon la revendication 6, dans lequel le ruban renforcé de fibres thermoplastiques (84) comporte un matériau en fibres de carbone continues.

8. Procédé selon une quelconque revendication précédente, dans lequel la couche de film thermoplastique (52) comporte un premier matériau thermoplastique, le matériau composite thermoplastique comporte un second matériau thermoplastique, et le premier matériau thermoplastique est identique au second matériau thermoplastique.

9. Procédé selon l'une quelconque des revendications 1 à 7, dans lequel la couche de film thermoplastique (52) comporte un premier matériau thermoplastique, le matériau composite thermoplastique comporte un second matériau thermoplastique, et le premier matériau thermoplastique est différent du second matériau thermoplastique.

10. Procédé selon une quelconque revendication précédente, comprenant également l'application d'un traitement de surface au plasma sur la couche de film thermoplastique (52) avant de lier la couche de film thermoplastique (52) au revêtement (48).

11. Boîtier de système de propulsion composite (30) comprenant :
un revêtement (48), une couche de film thermoplastique (52) et une coque extérieure (54) composite se prolongeant circonférentiellement autour d'une ligne centrale axiale (24) du boîtier de système de propulsion composite (30) ;
le revêtement (48) formant une surface radiale intérieure (42) du boîtier de système de propulsion composite (30), le revêtement (48) comportant un corps de matériau élastomère se prolongeant entre et vers un côté de revêtement extérieur (58) et un côté de revêtement intérieur (56) ;
la couche de film thermoplastique (52) se prolongeant entre et vers un côté de film extérieur (62) et un côté de film intérieur (60), le côté de film intérieur (60) étant disposé sur le côté de revêtement extérieur (58), la couche de film thermoplastique (52) comportant un premier matériau thermoplastique ; et
la coque extérieure (54) composite étant disposée sur le côté de film extérieur (62), la coque extérieure (54) composite formant une surface radiale extérieure (44) du boîtier de système de propulsion composite (30), la coque extérieure composite (54) comportant un second matériau thermoplastique et un matériau de renforcement en fibres.

12. Boîtier de système de propulsion composite selon la revendication 11, dans lequel le premier matériau thermoplastique est identique au second matériau thermoplastique.

13. Boîtier de système de propulsion composite selon la revendication 11 ou 12, dans lequel le côté film intérieur (60) est lié au côté revêtement extérieur (58) par une couche adhésive (50) .

14. Boîtier de système de propulsion composite selon l'une quelconque des revendications 11 à 13, dans lequel le matériau élastomère comporte du caoutchouc monomère d'éthylène propylène-diène (EPDM).

15. Boîtier de système de propulsion composite selon l'une quelconque des revendications 11 à 14, dans lequel le matériau de renforcement en fibres comporte un matériau en fibres de carbone continues.
